# EUROPÄISCHE PATENTSCHRIFT

(11) **EP 2 549 168 B1**
(45) Veröffentlichungstag und Bekanntmachung des Hinweises auf die Patenterteilung: **22.01.2014**
(21) Anmeldenummer: 12005223.8
(22) Anmeldetag: 16.07.2012
(51) Int. Cl.: F16L 59/135

(54) **Thermisch isolierende Rohrschelle**
Thermally insulating pipe clamp
Collier à isolation thermique

(30) Priorität: 16.07.2011 DE 102011107572
(43) Veröffentlichungstag der Anmeldung: 23.01.2013
(73) Patentinhaber: Secura Services AG, 8404 Winterthur (CH)
(72) Erfinder: Müller, Harald, 65719 Hofheim-Wallau (DE); Kruse, Reinhard, 63571 Gelnhausen (DE)
(74) Vertreter: Erb, Henning

(56) Entgegenhaltungen:
- DE-A1- 10 302 001
- DE-C1- 3 634 340
- DE-U1- 29 910 505

## Beschreibung

Die vorliegende Erfindung befasst sich mit einer thermisch isolierenden Rohrschelle mit einem Halter zur Wand-, Boden- oder Deckenmontage und einem ringförmig ausgebildeten Isolierkörper.

Thermisch isolierende Rohrschellen werden dort eingesetzt, wo bei Prozesswärme- oder Prozesskälteleitungen Rohre auch im Bereich ihrer Anbringungspunkte isoliert werden sollen, um Wirkungsgradverschlechterungen der Anlage zu vermeiden. Problematisch ist, dass die zu Isolierzwecken meist eingesetzten Kunststoffschäume nur in einem sehr engen Temperaturfenster wirksam sind bzw. durch zu hohe oder zu niedrige Temperaturen zerstört werden können. Derartige Rohrschellen sind z. B. aus der DE 20 2010 006 863 U1 und der DE 103 02 001 A1 bekannt.

Es sind daher bereits Ausführungsformen bekannt geworden, bei denen ein Isolierkörper aus Schaumglas (Foamglas) eingesetzt wird, der von einer üblichen Rohrschelle umspannt ist. Zwischen dem Isolierkörper und der Rohrschelle ist bei dieser vorbekannten Ausführungsform noch eine Einlage aus weichem Kunststoff vorgesehen, die zum einen der Schallentkopplung dient und zum anderen die Krafteinleitung in das extrem empfindliche Foamglas gleichmäßiger gestalten soll. So zeigt die DE 36 34 340 C1 eine Abstützvorrichtung, bei der ein Innenrohr von einer Innenhülse umgeben ist, die von einem kreiszylindrischen Ring aus geschäumter Keramik umgeben ist, um die wiederum ein geschlossener Ring aus Kunstharzschaum vorgesehen ist, der von mehreren Schellen umfasst ist, die eine gemeinsame Abstützung aufweisen.

Als weitere Dämmstoffe, die in einem sehr breiten Temperaturspektrum eingesetzt werden können, sind auch bereits Blähton und geschäumte Keramik bekannt. Allerdings werden diese Materialien zu reinen Dämmzwecken und nicht in der Befestigungstechnik eingesetzt, d.h. sie werden lediglich als nicht tragende Formelemente an zu isolierende Körper angelegt.

Die DE 295 02 368 U1 zeigt ein wärmedämmendes Halterungssystem, das zwar Keramik oder Schamotte als Isoliermaterial vorsieht, allerdings in massiver Ausbildung mit entsprechend hohem Gewicht und ohne das Problem mangelnder Festigkeit des massiven Keramikwerkstoffes.

Die Aufgabe der vorliegenden Erfindung besteht darin, eine thermisch isolierende Rohrschelle zu schaffen, die das mechanisch empfindliche Foamglas vermeidet.

Erfindungsgemäß wird die Aufgabe durch eine Rohrschelle der eingangs genannten Art gelöst, bei welcher der Isolierkörper aus geschäumter Keramik besteht, wobei der Isolierkörper im Kraftfluss liegt und die nach der Montage abzutragenden Lasten an den Halter abgibt sowie an seinem Innenumfang mit einem elastischen Material ausgekleidet ist.

Es hat sich überraschenderweise gezeigt, dass geschäumte Keramik nicht nur hervorragende Wärmedämmeigenschaften besitzt, sondern auch in der Lage ist, die beim Rohrleitungsbau auftretenden statischen und dynamischen Kräfte sicher und dauerhaft an den Halter ableiten zu können. Durch das elastische Material werden Toleranzen des Rohraußendurchmessers ausgeglichen und im Übergangsbereich zwischen Rohr und Rohrschelle eine gleichmäßige Krafteinleitung sichergestellt.

Vorzugsweise ist der Halter mit einem Schellenkörper verbunden, der in dem Isolierkörper eingebettet ist oder diesen umschlingt. Mittels des Schellenkörpers wird eine punktuelle Krafteinleitung vom Halter in den Isolierkörper vermieden.

Um die Montage zu vereinfachen, ist der Schellenkörper vorzugsweise geteilt und an der wenigstens einen Trennstelle mit einer Schraub- oder Gewindeverbindung vorgesehen. Bei einer aus zwei Hälften bestehenden Schellenkörper können beide Trennstellen über Schraubverbindungen verbunden sein oder eine Trennstelle ist mit einer Schraubverbindung und die andere mit einer Gelenkverbindung versehen, um den Schellenkörper aufschwenken zu können. Eine Teilung des Isolierkörpers, vorzugsweise in der Ebene des Schellenkörpers, ist ebenfalls vorteilhaft.

In einer weiteren bevorzugten Ausführungsform der Erfindung ist vorgesehen, dass zwischen dem Schellenkörper und dem Halter ein Schalldämmelement vorgesehen ist. Ein solches Schalldämmelement vermeidet die Einleitung von akustisch störenden Schwingungen in das Mauerwerk, da die geschäumte Keramik keine besonders guten Schalldämmwerte besitzt.

Das Schalldämmelement ist zweckmäßigerweise mit dem Halter verbunden und als Hülse im Bereich einer Schraubverbindung des geteilten Schellenkörpers vorgesehen oder als Beschichtung an dem Halter vorgesehen.

Beispielsweise kann der Halter ein radial innenseitig des Schellenkörpers liegendes, diesen überlappendes Schellensegment aufweisen, das mit der Beschichtung versehen ist. Das Schellensegment erstreckt sich über einen Winkelbereich und liegt konzentrisch zum Schellenkörper, wobei durch die Überlappung eine sichere Lastabtragung sichergestellt ist. Auch bei einem Brandfall kann sich der Schellenkörper auf das Schellensegment setzen und die Lasten abtragen, wenn das zwischenliegende Schalldämmelement durch das Feuer oder die hohe Temperatur zerstört werden sollte.

Vorzugsweise greift bei dieser Ausführungsform der Halter durch eine Öffnung im Schellenkörper, so dass das Schellensegment nicht unter der Last aus dem Schellenkörper herausgezogen werden kann.

Die Breite des Schellensegmentes entspricht der Breite des Schellenkörpers vorzugsweise im wesentlichen.

Als besonders zweckmäßig hat es sich erwiesen, dass der Schellenkörper mit seiner Breite wenigstens 20% der Länge des Isolierkörpers überdeckt, sodass eine gleichmäßige Lastabtragung zwischen Isolierkörper und Halter erfolgen kann.
Fig. 1 eine geschnittene Darstellung einer thermisch isolierenden Rohrschelle;
Fig. 1a eine vergrößerte, geschnittene Einzelheit einer abgewandelten thermisch isolierenden Rohrschelle mit in die Isolierung integrierter Verschraubung der Schelle;
Fig. 2 einen Schnitt einer weiteren Ausführungsform einer thermisch isolierenden Rohrschelle;
Fig. 3 eine Seitenansicht einer dritten Ausführungsform;
Fig. 4 eine geschnittene Darstellung der Rohrschelle nach Fig.3;
Fig. 5 eine im Vergleich zu Fig. 3 um 90 ° gedrehte Ansicht der Rohrschelle nach Fig. 3.

Eine thermisch isolierende Rohrschelle 10 besitzt einen in zwei Hälften geteilten Isolierkörper 12, in welchen ein entsprechend dem Isolierkörper 12 geteilter Schellenkörper 14 eingebettet ist. Der Schellenkörper 14 besitzt zwei Flansche 16, wobei beide Schellenhälften fluchtende Bohrungen 18 aufweisen, die durch Schraubverbindungen 20 miteinander verbunden sind. Die Flansche 16 liegen in der Trennfuge 22 des Isolierkörpers 12, wobei diese Trennfuge 22 durch ein dauerelastisches Material abgedichtet ist. Am Innendurchmesser 24 des Isolierkörpers 12 ist eine Schicht 26 aus dauerelastischen Material vorgesehen, um eventuelle Maßabweichungen am Rohrdurchmesser auszugleichen.

Die Rohrschelle 10 verfügt über einen Halter 28, der aber nicht unmittelbar mit dem Schellenkörper 14 verbunden ist, wie dies bei Rohrschellen üblich ist. Vielmehr ist an dem Halter 28 ein Schellensegment 30 vorgesehen, das radial innerhalb der oberen Hälfte des Schellenkörpers 14 angeordnet ist, wobei das Schellensegment 30 derart gekrümmt ist, dass es im wesentlichen konzentrisch zu dem Schellenkörper 14 liegt. Der Halter 28 ragt durch eine Öffnung 32 im Schellenkörper 14, wobei auch der Isolierkörper 12 eine Aussparung 34 in diesem Bereich aufweist, damit ein Gewindeanschluss 36 des Halters 28 zur Anbringung der Schelle an einer decken- oder wandseitig festgelegten Konsole zugänglich bleibt.

Als Material für den Isolierkörper 12 ist geschäumte Keramik vorgesehen, die neben sehr guten Wärmedämmwerten auch eine recht gute mechanische Festigkeit besitzt und zudem höchsten Brandschutzanforderungen genügt. Sofern Materialfestigkeitswerte des Isolierkörpers 12 nicht ausreichend sein sollten, kann dieser durch Fasern verstärkt sein, beispielsweise Kohle- oder Glasfasern, wobei auch sein Diffusionsverhalten und seine Oberflächeneigenschaften durch bestimmte Zuschlagstoffe gezielt beeinflussbar sind.

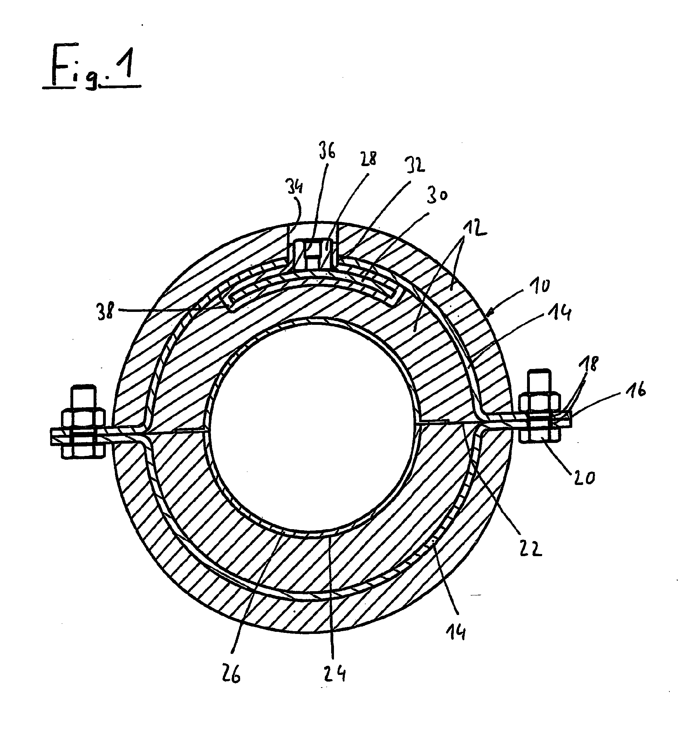

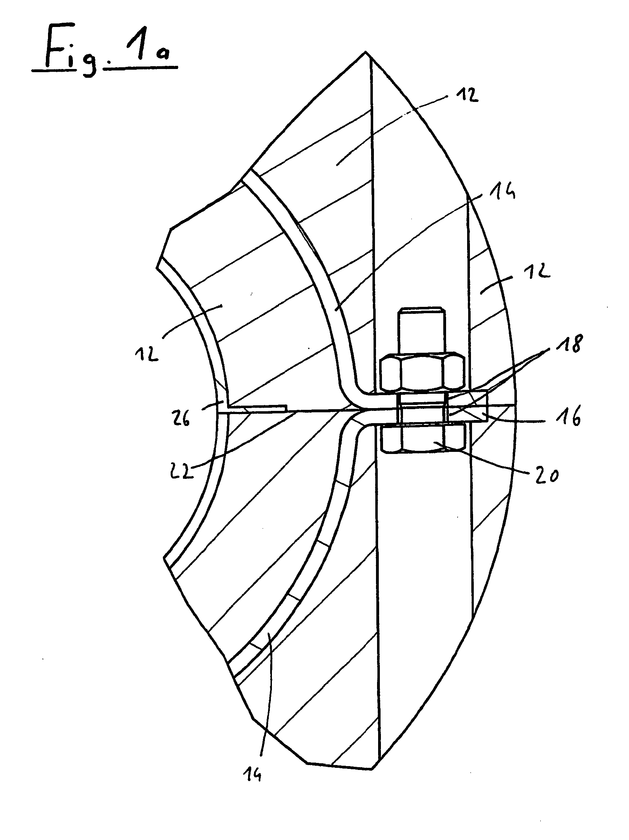

Geschäumte Keramik besitzt aufgrund seiner mangelnden Elastizität nur ungenügende Schalldämmeigenschaften, so dass eine Übertragung von Geräuschen von der Rohrleitung ins Mauerwerk möglich ist. Aus diesem Grund ist das Schellensegment mit einem Schalldämmelement 38 umformt, das beispielsweise aufvulkanisiert ist und auch die Halterung 28 umgibt. Das Schalldämmelement 38 sorgt für eine akustische Entkopplung des Schellensegments 30 von dem Schellenkörper 14, wobei die Schalldämmeigenschaften durch Materialwahl, Dicke und ggf. auch Aussparungen in der Ummantelung eingestellt werden können. Bei dem gezeigten Ausführungsbeispiel wird die Last einer montierten Rohrleitung über den Isolierkörper 12 an den Schellenkörper 14 und dann über das Schalldämmelement 38 an das Schellensegment 30 und der mit diesem verbundenen Halterung 28 abgetragen. Die großflächige Ausbildung des Schalldämmelements 38 zwischen dem Schellensegment 30 und dem Schellenkörper 14 ermöglicht dabei problemlos das Übertragen auch höherer Lasten. Geeignete Materialien für das Schalldämmelement 38 sind TPE, TPV (PP+ EPDM), EPDM, PU aber auch andere schallabsorbierende Materialien, wobei ggf. Brandschutzanforderungen berücksichtigt werden sollten. Es ist aber darauf hinzuweisen, dass die in Fig. 1 und auch 2 gezeigten Ausführungsformen eine gewisse Brandstabilität dadurch erreichen, das selbst nach einem Schmelzen oder Verbrennen des Schalldämmelements der Schellenkörper 14 immer noch sicher auf dem Schellensegment 30 ruht und die Last der Rohrleitung abgetragen werden kann.

Die gezeigte Rohrschelle eignet sich sowohl als Kälteschelle aber auch für die Isolierung von Wärmeleitungen.

In Fig. 1a ist eine Ausführungsform gezeigt, die sich konstruktiv von der in Fig. 1 gezeigten Ausführungsform dadurch unterscheidet, dass die Flansche der Schellenkörper 14 in den Isolierkörper 12 integriert sind, so dass die Schraubverbindung 20 vom Isolierkörper 12 umhüllt ist. Dabei kann der Teil der Schraubverbindung 20, der die Funktion der Mutter ausbildet auch vollständig in den Isolierkörper 12 eingebettet sein.

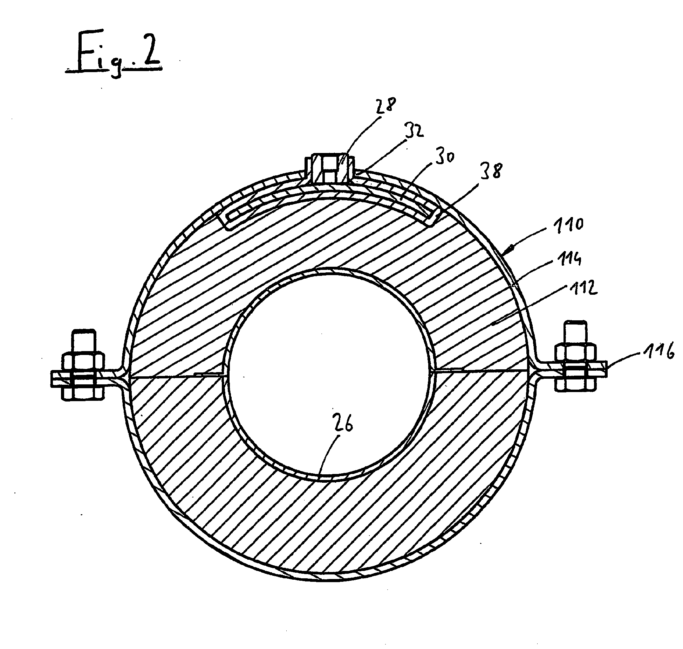

In Fig. 2 ist eine Ausführungsform gezeigt, die konstruktiv weitestgehend der in Fig. 1 gezeigten Ausführungsform entspricht. Allerdings ist bei dieser Ausführungsform ein Schellenkörper 114 nicht in einem Isolierkörper 112 eingebettet, sondern umfasst diesen radial an der Außenseite. Durch diese Ausführungsform lässt sich eine besonders gute geschlossene Isolierung der Rohrleitung erreichen. Im übrigen ist der Aufbau des Schellenkörpers 114, des Halters 28 sowie des Schellensegments 30 und des zwischenliegenden Schalldämmelements 38 identisch, so dass dies an dieser Stelle nicht mehr weiter ausgeführt werden muss.

Hinzuweisen ist noch darauf, dass eine der beiden Schraubenflansche 16 zwischen den beiden Hälften des Schellenkörpers 14 bei den beiden zuvor gezeigten Ausführungsformen auch als Gelenkverbindung ausgebildet sein kann, um die Rohrschelle 10 vor dem Anziehen aufschwenken und um das Rohr legen zu können.

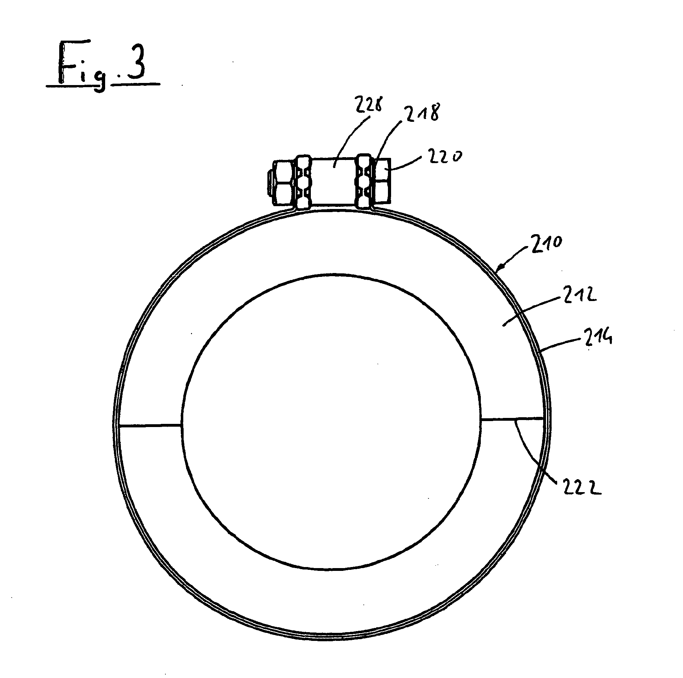

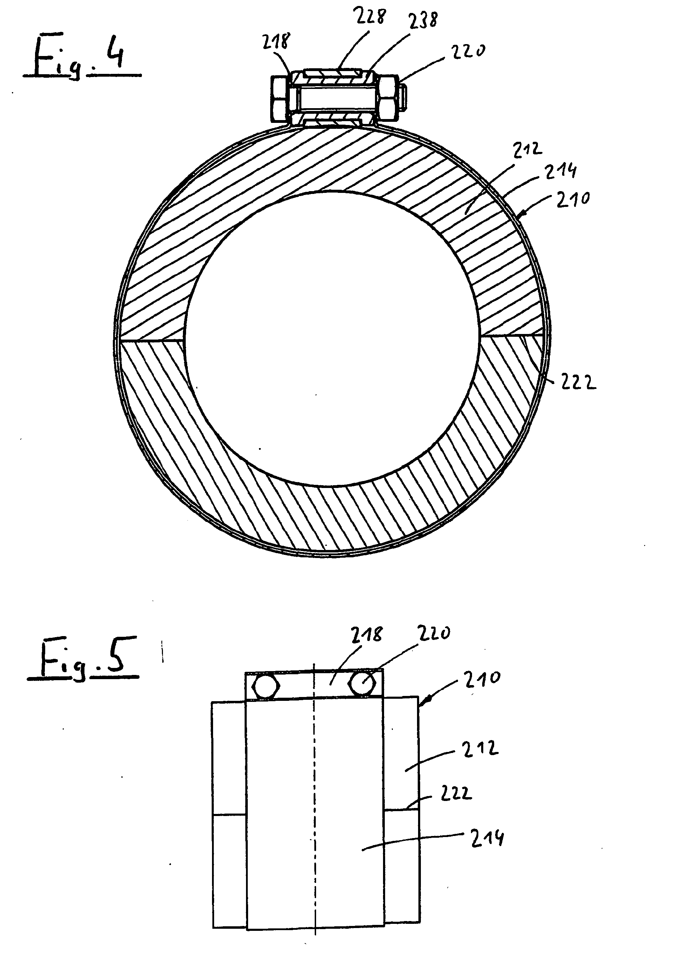

Eine alternative Ausführungsform ist in Fig. 3 bis 5 gezeigt. Die dort gezeigte Rohrschelle 210 besitzt einen ringförmigen Isolierkörper 212, der wiederum mittels einer Trennfuge 222 in zwei Hälften geteilt ist. Abweichend ist bei dieser Ausführungsform der Schellenkörper 214 ausgeführt, der einteilig ausgebildet ist und den Isolierkörper 212 vollständig umschlingt. Im Bereich eines Halters 228 besitzt der Schellenkörper 240 radial nach außen gestellte Laschen 218, die in einem bestimmten Abstand zueinander liegen. Wie in Fig. 4 besser zu erkennen ist, wird mittels einer Befestigungsschraube 220 und einer zugehörigen Mutter ein Schalldämmelement 238 zwischen den beiden Laschen 218 verspannt, wobei das Schalldämmelement 238 mit dem Halter 228 verbunden ist, der geeignete Befestigungselemente (nicht gezeigt), z.B. eine Gewindebohrung oder dergleichen aufweist, um die Rohrschelle 210 Decken- oder wandseitig festlegen zu können. Als Material für das Schalldämmelement 238 kommen die bei der zuvor beschriebenen Ausführungsform erwähnten Materialien zum Einsatz.

Um die Dimensionen der Rohrschelle zu verdeutlichen, ist in Fig. 5 eine gegenüber Fig. 3 um 90° gedrehte Ansicht der Rohrschelle 210 gezeigt, aus der deutlich wird, dass die Laschen 218 des Schellenkörpers 214 mit zwei Befestigungsschrauben 220 miteinander verbunden sind. Gut erkennbar ist auch, dass der Isolierkörper 212 seitlich über den Schellenkörper 214 übersteht.

Allen gezeigten Ausführungsformen ist gemein, dass der Schellenkörper eine gegenüber herkömmlichen Rohrschellen deutlich größere Breite besitzt, um die Last gleichmäßig zu verteilen. In der Regel überdeckt die Breite des Schellenkörpers wenigstens die Hälfte der Länge des Isolierkörpers.

## Patentansprüche

1. Thermisch isolierende Rohrschelle mit einem Halter (28; 228) zur Wand-, Boden- oder Deckenmontage und einem ringförmig ausgebildeten Isolierkörper (12; 112; 212) **dadurch gekennzeichnet, dass** der Isolierkörper (12; 112; 212) aus geschäumter Keramik besteht, wobei der Isolierkörper (12; 112; 212) im Kraftfluss liegt und die nach der Montage abzutragenden Lasten an den Halter (28; 228) abgibt sowie an seinem Innenumfang mit einem elastischen Material ausgekleidet ist.

2. Rohrschelle nach Anspruch 1, **dadurch gekennzeichnet, dass** der Halter in (28; 228) mit einem Schellenkörper (14; 114; 214) verbunden ist, der in dem Isolierkörper (12; 112; 212) eingebettet ist oder diesen umschlingt.

3. Rohrschelle nach Anspruch 2, **dadurch gekennzeichnet, dass** der Schellenkörper (14; 114; 214) geteilt ist und an der wenigstens einen Trennstelle eine Schraub- oder Gewindeverbindung vorgesehen ist.

4. Rohrschelle nach einem der vorhergehenden Ansprüche, **dadurch gekennzeichnet, dass** der Isolierkörper geteilt ist.

5. Rohrschelle nach einem der Ansprüche 2 bis 4, **dadurch gekennzeichnet, dass** zwischen dem Schellenkörper (14; 114; 214) und dem Halter (28; 228) ein Schalldämmelement (38; 238) vorgesehen ist.

6. Rohrschelle nach Anspruch 5 **dadurch gekennzeichnet, dass** das Schalldämmelement (38; 238) mit dem Halter (28; 228) verbunden ist und als Hülse im Bereich der Verschraubung (220) des geteilten Schellenkörpers (214) oder als Beschichtung an dem Halter (28) angebracht ist.

7. Rohrschelle nach Anspruch 6, **dadurch gekennzeichnet, dass** der Halter (28) mit einem Schellensegment (30) ausgebildet ist, das mit der Beschichtung, die das Schalldämmelement (38) bildet, versehen ist.

8. Rohrschelle nach Anspruch 7, **dadurch gekennzeichnet, dass** der Halter (28) durch eine Öffnung (32) im Schellenkörper (14) greift.

9. Rohrschelle nach Anspruch 7 oder 8, **dadurch gekennzeichnet, dass** die Breite des Schellenkörpers (14) der Breite des Schellensegments (30) im wesentlichen entspricht.

10. Rohrschelle nach Anspruch 9, **dadurch gekennzeichnet, dass** der Schellenkörper (14) mit seiner Breite wenigstens 20% der Länge des Isolierkörpers (12; 112; 212) überdeckt.

## Claims

1. Thermally insulating pipe clamp comprising a holder (28; 228) for wall-, floor- or ceiling installation and an annular insulating body (12; 112; 212), **characterised in that** the insulating body (12; 112; 212) is made of foamed ceramic, the insulating body (12; 112; 212) being located in the power flow, transferring the load to be removed to the holder (28; 228) after installation and being lined on its inner circumference with a resilient material.

2. Pipe clamp according to claim 1, **characterised in that** the holder (28; 228) is connected to a clamp body (14; 114; 214) which is embedded in the insulating body (12; 112; 212) or is wound around said body.

3. Pipe clamp according to claim 2, **characterised in that** the clamp body (14; 114; 214) is divided and a screw or threaded connection is provided at the at least one separation point.

4. Pipe clamp according to any of the preceding claims, **characterised in that** the insulating body is divided.

5. Pipe clamp according to any of claims 2 to 4, **characterised in that** a sound-absorbing element (38; 238) is provided between the clamp body (14; 114; 214) and the holder (28; 228).

6. Pipe clamp according to claim 5, **characterised in that** the sound-absorbing element (38; 238) is connected to the holder (28; 228) and is attached in the region of the threaded assembly (220) of the divided clamp body (214) as a sleeve or to the holder as a coating (28).

7. Pipe clamp according to claim 6, **characterised in that** the holder (28) is formed having a clamp segment (30) which is provided with the coating which forms the sound-absorbing element (38).

8. Pipe clamp according to claim 7, **characterised in that** the holder (28) engages through an opening (32) in the clamp body (14).

9. Pipe clamp according to either claim 7 or claim 8, **characterised in that** the width of the clamp body (14) substantially corresponds to the width of the clamp segment (30).

10. Pipe clamp according to claim 9, **characterised in that** the clamp body (14) covers at least 20 % of the length of the insulating body (12; 112; 212) with its width.

## Revendications

1. Collier à isolation thermique comportant un support (28, 228) pour permettre son montage pour une paroi, un sol ou un plafond et un corps isolant (12, 112, 212) de forme annulaire,
**caractérisé en ce que**
le corps isolant (12, 112, 212) est réalisé en une céramique cellulaire, ce corps isolant (12, 112, 212) étant situé dans le flux des forces, et transférant sur le support (28, 228) les forces devant être évacuées après le montage, et est revêtu sur sa périphérie interne d'un matériau élastique.

2. Collier conforme à la revendication 1,
**caractérisé en ce que**
le support (28, 228) est relié à un corps de collier (14, 114, 214) qui est noyé dans le corps isolant (12, 112, 212) ou entoure celui-ci en formant une boucle.

3. Collier conforme à la revendication 2,
**caractérisé en ce que**
le corps de collier (14, 114, 214) est subdivisé et il est prévu sur le point de séparation une liaison par vis ou par filetage.

4. Collier conforme à l'une des revendications précédentes,
**caractérisé en ce que**
le corps isolant est subdivisé.

5. Collier conforme à l'une des revendications 2 à 4,
**caractérisé en ce qu'**
entre le corps de collier (14, 114, 214) et le support (28, 228) il est prévu un élément d'isolation acoustique (38, 238).

6. Collier conforme à la revendication 5,
**caractérisé en ce que**
l'élément d'isolation acoustique (38, 238) est relié au support (28, 228) et est appliqué sous la forme d'un manchon dans la zone du filetage (220) du corps de collier subdivisé (214) ou sous la forme d'un revêtement sur le support (28).

7. Collier conforme à la revendication 6,
**caractérisé en ce que**
le support (28) est réalisé avec un segment de collier (30) qui est équipé du revêtement qui forme l'élément d'isolation acoustique (38).

8. Collier conforme à la revendication 7,
**caractérisé en ce que**
le support (28) vient en prise par une ouverture (32) dans le corps de collier (14).

9. Collier conforme à la revendication 7 ou 8,
**caractérisé en ce que**
la largeur du corps de collier (14) correspond essentiellement à la largeur du segment de collier (30).

10. Collier conforme à la revendication 9,
**caractérisé en ce que**
le corps de collier (14) chevauche par sa largeur au moins 20 % de la longueur du corps isolant (12, 112, 212).
